# FASCICULE DE BREVET EUROPEEN

(11) **EP 1 855 868 B1**
(45) Date de publication et mention de la délivrance du brevet: **31.12.2008**
(21) Numéro de dépôt: 06726070.3
(22) Date de dépôt: 10.03.2006
(51) Int. Cl.: B29C 49/42

(54) **DISPOSITIF DE PREHENSION DE CORPS CREUX PAR LEUR COL ET INSTALLATION DE TRANSPORT DE CORPS CREUX EQUIPEE DE TELS DISPOSITIFS**
VORRICHTUNG ZUM ERGREIFEN DES HALSES VON HOHLKÖRPERN UND MIT SOLCHEN VORRICHTUNGEN AUSGERÜSTETE ANLAGE ZUM TRANSPORT VON HOHLKÖRPERN
DEVICE FOR GRIPPING THE NECK OF HOLLOW BODIES AND HOLLOW BODY TRANSPORT INSTALLATION WHICH IS EQUIPPED WITH SUCH DEVICES

(30) Priorité: 11.03.2005 FR 0502446
(43) Date de publication de la demande: 21.11.2007
(73) Titulaire: Sidel Participations, 76930 Octeville Sur Mer (FR)
(72) Inventeur: DUJARDIN, Willy c/o Sidel Participations, F-76930 Octeville-sur-Mer (FR); LAPERT, Christophe c/o Sidel Participations, F-76930 Octeville-sur-Mer (FR)
(74) Mandataire: Cabinet Plasseraud
(86) Numéro de dépôt international: PCT/FR2006/000539
(87) Numéro de publication internationale: WO 2006/095099

(56) Documents cités:
- FR-A- 2 789 932
- US-A- 4 432 720
- US-A1- 2002 037 338
- US-A1- 2004 121 038

## Description

L'invention se rapporte au domaine de la fabrication ou du traitement de corps creux, notamment de récipients, munis de cols respectifs tels que des bouteilles, en matériau thermoplastique par soufflage ou étirage-soufflage de préformes chauffées.

L'invention s'intéresse plus particulièrement aux installation de traitement en ligne agencées pour ce type de fabrication ou de traitement, dans lesquelles des corps creux présentant un col (par "corps creux", on entend désigner dans le présent document les préformes de récipients, ou encore les récipients finaux, ou éventuellement des récipients intermédiaires, c'est-à-dire tout type de corps creux comportant deux parties distinctes, à savoir un col et une seconde partie appelée "corps" qui peut se présenter dans les installations visées par l'invention) sont déplacés individuellement les uns à la suite des autres à l'aide de dispositifs de transport. Certains de ces dispositifs de transport sont agencés pour tenir les corps creux par leur col, de manière à laisser dégagés leurs corps.

La fabrication d'un récipient final directement à partir d'une préforme dans une machine à simple soufflage, de même que la fabrication d'un récipient intermédiaire à partir d'une préforme, ou encore la fabrication d'un récipient final à partir d'un récipient intermédiaire dans une machine à double étape de soufflage nécessite que le corps de la préforme ou du récipient intermédiaire soit chauffé dans une unité de conditionnement thermique, ou four, dans laquelle la matière constitutive du corps de la préforme ou du récipient intermédiaire est réchauffée à l'aide de lampes infrarouges afin d'être portée à une température supérieure à sa température de transition vitreuse, toutefois sans atteindre sa température de cristallisation. C'est à l'issue de cette phase de conditionnement thermique de son corps que la préforme ou le récipient intermédiaire est transféré dans un moule d'une unité de soufflage ou d'étirage-soufflage pour le moulage du récipient final ou intermédiaire, par déformation du corps ramolli.

Le col de ce type de corps creux est toujours réalisé, lors de la fabrication par moulage par injection de la préforme, à la forme et aux dimensions définitives du col du récipient final et ne doit pas être déformé lors des traitements ultérieurs conduisant au récipient final ; en particulier, le col ne doit pas être chauffé de façon telle qu'il puisse se ramollir. Pour cette raison, l'unité de conditionnement thermique est agencée pour que le col de la préforme ou du récipient intermédiaire soit le plus protégé possible des éléments chauffants.

Dans les installations de traitement en ligne, le traitement thermique est assuré dans des fours tunnels à travers lesquels les corps creux (préformes ou récipients intermédiaires) sont déplacés par des dispositifs de transport sans fin équipés de dispositifs de préhension propres à les saisir par leur col, les dispositifs de préhension étant en outre montés à rotation sur des éléments transporteurs respectifs constitutifs du dispositif de transport de manière que les corps à proprement parler des corps creux, tournant sur eux-mêmes, soient exposés sur la totalité de leur pourtour aux lampes de chauffage disposées unilatéralement dans le four. Pour protéger les cols lors des déplacements à travers les fours, il est connu d'équiper les fours avec des rampes de protection disposées de part et d'autre de la trajectoire suivies par les corps creux, juste au niveau de la limite entre leur col et leur corps. Ces rampes forment un écran et les rayonnements émis par les lampes de chauffage ne peuvent pas atteindre directement les cols des préformes ou des récipients intermédiaires.

Cependant, du fait que les rayonnements émis par les lampes se propagent dans toutes les directions, une partie des rayonnements peuvent atteindre les cols par l'intérieur des corps creux après avoir pénétré à l'intérieur de ceux-ci.

Toutefois, dans une configuration courante d'agencement des dispositifs de transport, les dispositifs de préhension des cols sont conformés pour être introduits à l'intérieur des cols (technique dite du « vêtissage » intérieur) et pour les maintenir par serrage contre la face intérieure desdits cols. Dans ce cas, ce sont les têtes des dispositifs de préhension introduits dans les cols qui, se comportant comme un bouchon, empêchent les rayonnements ayant pénétré à l'intérieur des corps creux d'atteindre leurs cols.

Pour certaines applications cependant, il est apparu intéressant de ne plus saisir les corps creux par la face interne du col, par exemple dans le but d'éviter toute contamination bactériologique de cette face qui est amenée ultérieurement à être au contact du produit avec lequel sera rempli le récipient final. Cela permet aussi de supprimer tout risque de rayure de la face interne du col. On prévoit alors un dispositif de préhension par la face externe du col du corps creux (technique dite du « vêtissage » extérieur).

Le document FR 2 789 932 divulgue un dispositif de transport de corps creux, ici constitués par des préformes, équipé de dispositifs de préhension agencés pour le vêtissage extérieur et comportant chacun des griffes de préhension qui enserrent une face externe du col de la préforme. Le dispositif de préhension comporte également un noyau central qui pénètre axialement à l'intérieur du col et qui présente une face transversale inférieure réfléchissante qui, lorsque la préforme est en place sur le dispositif de préhension, est située axialement sensiblement au niveau de la limite entre le col et le corps de la préforme.

Plus précisément, le dispositif de préhension comporte une cloche de préhension qui présente une plaque supérieure circulaire et une jupe cylindrique s'étendant axialement vers le bas depuis le bord périphérique de la plaque, de sorte que la cloche définit ainsi un espace cylindrique ouvert vers le bas. La cloche comporte des fentes réparties angulairement autour de son axe de révolution ; chaque fente s'étend axialement sur toute la hauteur de la jupe et également s'étend radialement sur environ le tiers externe de la plaque. Ainsi, entre deux fentes, il est délimité une griffe déformable élastiquement, dont l'extrémité libre, formée par le bord inférieur de la jupe, peut se déplacer radialement par rapport à l'axe de révolution de la cloche. La cloche ainsi agencée est propre à coiffer le col de la préforme, les griffes enserrant élastiquement la face externe du col. La face interne de l'extrémité libre des griffes est lisse, de sorte que la préforme est saisie et maintenue par simple serrage radial. La cloche est réalisée en un matériau plastique de type poly acétal. Pour renforcer l'effort de serrage, un ressort annulaire peut enserrer la cloche au niveau du bord inférieur de la jupe pour forcer l'extrémité Libre des griffes radialement vers l'intérieur. Dans l'exemple proposé, le ressort est reçu dans une gorge circulaire formée sur la face externe de la jupe, au niveau de son bord inférieur.

Le dispositif de préhension décrit dans le document FR 2 789 932 est monté à rotation autour de son axe sur un élément transporteur constitutif du dispositif de transport.

La Demanderesse suppose que le dispositif de préhension décrit dans le document FR 2 789 932 peut être responsable d'incidents tels que la casse de lampes infrarouges de chauffage, ainsi que de problèmes de synchronisation avec les moyens de transferts entre le four d'où sortent les préformes chaudes et l'unité de soufflage. Ces problèmes seraient dus à un mauvais positionnement du col de certaines préformes dans le dispositif de préhension. Un grand nombre de paramètres peuvent affecter la qualité de la préhension des préformes, par exemple : variabilité des dimensions des préformes, mauvais positionnement des organes de la chaîne de convoyage des préformes, dilatation thermique associée à un refroidissement temporairement insuffisant des moyens de préhension, vibrations, fatigue thermique et/ou mécanique.

La Demanderesse souhaite donc modifier la structure des moyens de préhension pour réduire dans toute la mesure du possible le nombre et la fréquence des incidents ci-dessus mentionnés.

Aucun des montages de l'art antérieur connu de la Demanderesse ne semble à même de réduire la fréquence de ces incidents, et certains de ces dispositifs antérieurs sont susceptibles de provoquer d'autres incidents.

Le document US 2004/0121038 divulgue un dispositif de préhension agencé pour le vêtissage extérieur d'un col de corps creux tel qu'une préforme. Ce dispositif de préhension comporte une pièce en cloche dont la paroi latérale est munie de logements radiaux, distribués périphériquement, débouchant intérieurement par une ouverture rétrécie ; chaque logement abrite une bille qui est repoussée à travers l'ouverture par un organe élastique de manière que la bille soit partiellement saillante sur la paroi interne de la cloche de manière à pouvoir prendre appui élastiquement sous un relief de la face externe du col d'une préforme enfoncé dans la cloche. Dans l'exemple illustré à la figure 8 de ce document, les billes prennent appui contre le bord d'une gorge annulaire prévue à la base du col de la préforme et adjacente à la collerette du col, le bord extrême de la cloche venant en appui contre la collerette. Cet agencement présente l'inconvénient de nécessiter un enfoncement important de la cloche sur le col ; de plus une gorge annulaire n'est pas toujours présente à la base du col des préformes.

Un vêtissage plus rapide pourrait être obtenu en enfonçant la cloche sur le col d'une distance moindre, de sorte que les billes prennent appui contre les reliefs formés par le filetage prévu pour le vissage d'un bouchon sur le récipient achevé et rempli ; ce type de vêtissage pourrait convenir pour tous les types de cols, y compris ceux dépourvus de gorge annulaire à leur base. Toutefois dans ce cas, en raison de l'inclinaison du filetage, toutes les billes ne trouveraient pas des appuis identiques et radialement convergents dans un même plan, de sorte qu'il se formerait un couple susceptible de conduire à un positionnement désaxé du corps creux, et l'on retrouverait alors les inconvénients exposés plus haut avec le risque de heurt de lampes de chauffage par le corps creux (préforme ou récipient intermédiaire) et le risque d'un chauffage non homogène de cet objet lors de son déplacement avec rotation à la traversée du four. En outre, selon les corps creux la conformation du filetage présent sur leur col peut différer (filet unique ou tronçons de filets, pas différents et donc inclinaisons différentes du ou des filets, ...) : l'appui des billes contre le filetage pourrait donc varier selon les corps creux manipulés.

L'invention a essentiellement pour but de-proposer une structure perfectionnée de dispositif de préhension de corps creux par leur col qui écarte les inconvénients ci-dessus exposés des dispositifs de l'état de la technique et qui donne mieux satisfaction aux exigences de la pratique, tout en restant de construction robuste, fiable et cependant simple et peu coûteuse.

L'invention vise également à fournir un dispositif de préhension de corps creux par leur col qui permette une bonne tolérance à des variations dimensionnelles du diamètre du col, ainsi qu'une adaptation rapide à différents contours externes de col.

L'invention vise en outre à fournir un dispositif de préhension de corps creux par leur col qui soit d'un encombrement identique à celui des dispositifs existant sur les dispositifs de transport en service actuellement, de manière notamment que les dispositifs antérieurs puissent être sans problème remplacés par des dispositifs conformes à l'invention.

A ces fins, l'invention propose un dispositif de préhension, par l'extérieur, d'un col d'un corps creux, lequel dispositif de préhension comporte un corps annulaire supportant au moins deux pièces de préhension possédant des faces d'appui respectives, lesdites pièces de préhension étant déplaçables sensiblement radialement et contraintes par des moyens élastiques de manière telle que lesdites pièces de préhension soient aptes à occuper une première position radiale dans laquelle elles sont en appui contre une butée du corps annulaire avec leur face d'appui saillant à l'intérieur du corps annulaire et une seconde position radiale dans laquelle elles sont repoussées avec leur face d'appui portant contre la paroi extérieure du col d'un corps creux engagé dans ledit corps annulaire, lequel dispositif de préhension, -étant agencé conformément à l'invention, se caractérise en ce que les faces d'appui desdites pièces de préhension sont arquées en forme générale d'arc de cylindre.

Grâce à cet agencement, les pièces de préhension s'appuient sur l'extérieur des reliefs de la face externe du col des corps creux quels que soient ces reliefs et quelle qu'en soit la forme ; en particulier, elles peuvent prendre appui sur les filetages indifféremment de la conformation de ceux-ci, lorsque de tels filetages sont présents. En outre, la capacité de préhension du dispositif reste indépendante de la présence ou de l'absence d'une gorge annulaire sur la face externe du col ; toutefois, on est assuré que les efforts de serrage des pièces de préhension sont tous radiaux et situés dans un même plan, de sorte que le col est maintenu d'une façon régulière sur la totalité de son pourtour, ce qui assure que le corps creux est alors disposé avec son axe en coïncidence avec l'axe du dispositif de préhension.

Dans un mode de réalisation préféré, on prévoit que le corps annulaire comporte au moins deux lumières et que les pièces de préhension soient engagées respectivement à travers ces lumières.

Toujours de façon préférée, on prévoit également que les pièces de préhension soient des segments de bague et que les lumières soient des lumières allongées.

Pour faciliter le glissement des pièces de préhension sur la face externe du col lors du vêtissage, il est avantageux qu'au moins une pièce de préhension comporte une partie extrême inférieure tronconique et/ou une saillie sur sa face d'appui.

Pour assurer un effort de serrage régulièrement réparti sur le pourtour du col, il est souhaitable que les pièces de préhension soient distribuées de façon sensiblement équidistante sur le corps annulaire.

Dans un exemple de réalisation concret, on prévoit que les pièces de préhension et les lumières respectives soient au nombre de quatre diamétralement opposées deux à deux, ce qui conduit à une structure simple tout en assurant un serrage bien équilibré sur le pourtour du col.

Dans un mode de réalisation simple et économique, les moyens élastiques comprennent au moins une bague en un matériau élastique entourant le corps annulaire et les pièces de préhension, et avantageusement les moyens élastiques, comprennent plusieurs joints toriques élastiques juxtaposés ; de tels joints toriques sont couramment disponibles et couramment tenus en stock ; de plus, la mise en oeuvre de plusieurs joints (par exemple trois joints dans un exemple typique de réalisation) permet d'ajuster de façon relativement précise l'effort de rappel exercé sur les pièces de préhension et donc l'effort de serrage exercé sur les cols ; en outre ce type de montage peut se révéler sécuritaire dans la mesure où, en cas de rupture d'un joint torique en cours de fonctionnement, un effort de serrage est cependant maintenu et le corps creux ne tombe pas.

Pour protéger les moyens élastiques, on peut avantageusement prévoir une jupe annulaire, solidaire du corps annulaire et supportée par celui-ci, qui s'étend radialement extérieurement aux moyens élastiques.

Il est souhaitable que le dispositif de préhension comprenne des moyens d'éjection comportant au moins un doigt sensiblement parallèle à l'axe du corps annulaire et déplaçable parallèlement à cet axe.

Il est également souhaitable que le dispositif de préhension comprenne un noyau interne, intérieur au corps annulaire et coaxial à celui-ci, ayant une face transversale inférieure qui est réfléchissante pour les rayonnements électromagnétiques, de manière à assurer une protection du col contre la chaleur piégée à l'intérieur du corps creux.

Bien que le dispositif de préhension agencé conformément à l'invention puisse, de par sa structure, être utilisé pour le transport de tout type de corps creux muni d'un col dans une installation de fabrication en ligne, une application tout particulièrement préférée et visée par l'invention concerne l'agencement d'un dispositif de transport de corps creux munis d'un col, comprenant une multiplicité d'éléments de transport qui sont accouplés les uns à la suite des autres en une chaîne sans fin et qui comportent des dispositifs respectifs de préhension de corps creux individuels par le col de ceux-ci, lesdits dispositifs de préhension étant agencés conformément à l'invention comme exposé ci-dessus ; notamment, il peut s'agir d'un dispositif de transport propre à transporter des préformes ou des récipients intermédiaires et agencé pour s'étendre à travers un four tunnel pour le chauffage des préformes en amont d'une installation de soufflage ou d'étirage-soufflage des préformes ou des récipients intermédiaires chauds, les éléments de transport étant agencés pour que, au cours de leur déplacement, les dispositifs de préhension respectifs soient animés d'un mouvement de rotation autour de leur axe de manière que les corps des préformes ou des récipients intermédiaires soient exposés sur tout leur pourtour aux lampes de chauffage disposées unilatéralement dans le four.

L'invention trouve une application industrielle très avantageuse dans un four de conditionnement thermique pour une installation de soufflage de récipients en matériau thermoplastique, notamment de bouteilles en PET.

D'autres objets et avantages de l'invention apparaîtront au cours de la description qui suit de certains modes de réalisation préférés donnés à titre purement illustratif, description dans laquelle on se réfère aux dessins annexés sur lesquels :
- la figure 1 est une vue en coupe diamétrale d'une partie d'un élément de transport équipé d'un dispositif de préhension de corps creux par le col de celui-ci, ledit dispositif de préhension étant montré à vide (col du corps creux non saisi) ;
- la figure 2 est une vue en coupe diamétrale du dispositif de la figure 1 montré en position fonctionnelle, le col du corps creux, par exemple une préforme, étant en position saisi par le dispositif de préhension ; et
- la figure 3 est une section selon la ligne III-III de la figure 1.

Pour la clarté de la description qui suit, on utilisera des notions telles que haut, bas, inférieur, supérieur, en référence à la disposition des éléments tels que représentés sur les figures, sans que ces termes désignent impérativement la situation exacte des organes dans la machine, d'autant plus que, dans certaines installations de fabrication de récipients, le dispositif de transport est agencé pour, après la préhension des préformes ou des récipients intermédiaires orientés col en haut, permettre en amont du four un retournement individuel des éléments de transport de manière que la préforme ou le récipient intermédiaire circule col en bas devant les moyens de chauffage au sein du four, puis en aval du four un nouveau retournement des préformes ou des récipients intermédiaires tête en haut avant leur introduction dans la machine de soufflage.

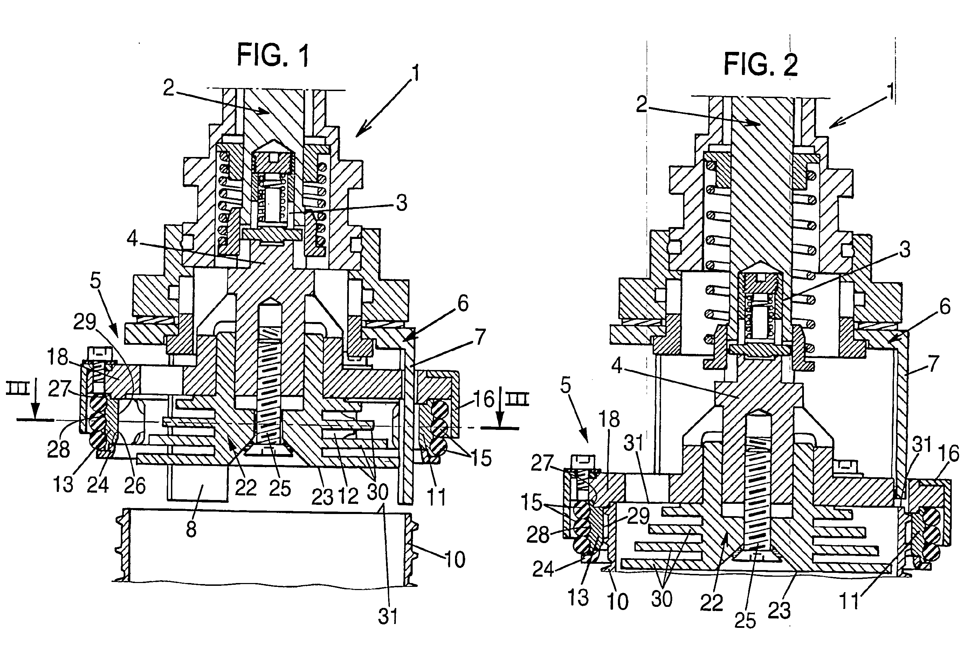

On se reporte tout d'abord à la figure 1 qui représente la partie inférieure d'un élément de transport constitutif d'un dispositif de transport formé d'une multitude de tels éléments solidarisés avec articulation les uns à la suite des autres en une chaîne sans fin.

Dans le cas où le dispositif de transport équipe un four tunnel approprié pour le chauffage de corps creux dans une installation de fabrication de récipients en matière thermoplastique telle que du PET, chaque élément de transport constitutif du dispositif de transport, lors de sa circulation dans le four, est entraîné en rotation autour de son axe (tournette) de manière que le corps à proprement parler du corps creux soit exposé sur tout son pourtour aux moyens de chauffage disposés unilatéralement dans le four.

L'élément de transport, désigné dans son ensemble par la référence 1, comprend un mandrin 2 tournant (entraîné par des moyens non montrés connus de l'homme du métier) pourvu d'un alésage 3 central dans lequel est montée une tige 4 de support appartenant à un dispositif, désigné dans son ensemble par la référence numérique 5, de préhension d'un col 10 d'un corps creux.

La tige 4 est montée de manière amovible sur le mandrin 2. Un tel montage, de type baïonnette, est connu en soi et exploité par la Demanderesse. La partie supérieure de la tige 4 forme un culot à baïonnette destiné à être reçu dans une douille correspondante formée à l'extrémité inférieure de l'alésage 3, avec empilement axial d'un cône d'appui.

Le dispositif 5 de préhension comporte un corps 18 annulaire en forme générale de cloche circulaire ouverte vers le bas et montée coaxialement sur la tige 4, par exemple à l'aide d'une vis 25 axiale. Le corps 18 annulaire possède une jupe 24 de forme générale cylindrique de révolution qui est percée de plusieurs lumières 26 allongées périmétriquement. De préférence, les lumières sont réparties de façon équidistante et sont sensiblement identiques.

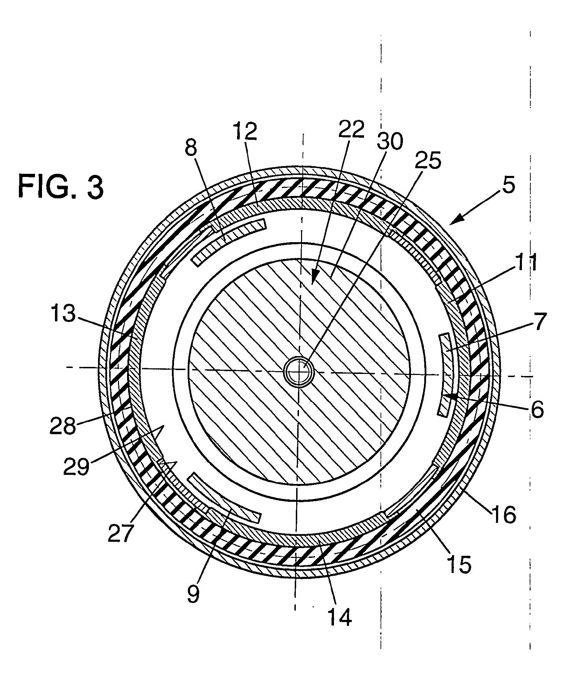

Le dispositif de préhension comprend plusieurs pièces de préhension arquées, en arc de cylindre, qui sont en nombre égal à celui des lumières 26 et qui sont engagées à travers les lumières 26 respectives. Les lumières et les pièces de préhension peuvent être en nombre quelconque, pair ou impair. Dans l'exemple illustré aux figures 1 et 3, les pièces de préhension sont au nombre de quatre, qui est considéré comme le compromis le mieux approprié en pratique pour l'obtention d'un serrage correct du col 10 avec un nombre minimum de pièces. Les quatre pièces de préhension sont désignées par les références numériques 11, 12, 13, 14 respectivement sur les figures.

Les pièces 11-14 de préhension se présentent donc sous la forme générale de secteurs ou tronçons de bague sensiblement identiques et équidistants, ici diamétralement opposés deux à deux. La mise en oeuvre de secteurs arqués identiques et équidistants permet un montage aisé et sans risque d'erreur, ainsi qu'un bon équilibrage du poids du corps creux.

Les pièces 11-14 de préhension sont conformées avec un épaulement 27 périphérique de telle sorte que leur face 28 radialement extérieure possède une dimension supérieure à celle de la lumière 26 et que chaque pièce de préhension puisse venir en appui contre le bord -périphérique arrière, formant butée, de la lumière 26 respective. De plus les pièces 11-14 de préhension possèdent une dimension radiale ou épaisseur qui est supérieure à l'épaisseur de paroi de la jupe 24 de sorte que la face 29 radialement intérieure de chaque pièce de préhension soit en saillie dans le volume intérieur de la cloche formée par le corps 18 annulaire.

Une faible course de déplacement radial à travers les lumières respectives est conférée aux pièces 11, 12, 13, 14 de préhension en associant à celles-ci des moyens 15 de rappel élastique les ramenant en appui contre le bord arrière des lumières respectives. Dans un mode de réalisation simple, les moyens 15 de rappel élastique comprennent au moins une bague en un matériau élastique entourant le corps 18 annulaire et les pièces 11, 12, 13, 14 de préhension. De façon pratique, la susdite bague élastique est formée par un ou plusieurs joints toriques, trois joints dans l'exemple concret de réalisation montré aux figures 1 et 3. Dans ce cas, le choix du nombre et des caractéristiques du matériau constituant le ou les joints permet d'adapter la force de serrage exercée sur le col 10. Le ou les joints toriques sont protégés des infrarouges par une paroi métallique formant jupe 16 extérieure rapportée sur le corps 18 annulaire.

Grâce à l'agencement qui vient d'être décrit, les pièces 11-14 de préhension sont aptes à occuper deux positions radiales, à savoir une première position, représentée en figure 1, dans laquelle chaque pièce 11, 12, 13, 14 de préhension est en appui contre le bord arrière de la lumière 26 respective (position d'attente ou à vide) et une deuxième position, représentée en figure 2, dans laquelle la face 29 intérieure de chaque pièce 11, 12, 13, 14 de préhension est en appui contre le col 10 d'un corps creux qui a été introduit dans la cloche définie par le corps 18 annulaire.

La face 29 radialement intérieure de chacune des pièces 11-14 de préhension est de forme complémentaire au contour externe du col 10 du corps creux. Si le corps creux est une préforme ou un récipient intermédiaire destiné à l'obtention d'un récipient devant être fermé par un bouchon à vis, le col 10 est pourvu, dès l'injection de la préforme, d'un filetage qui possède sa forme et ses dimensions définitives : les pièces 11-14 de préhension prennent alors appui contre le bord externe du filetage.

Dans l'exemple illustré aux figures 1 à 3, chaque pièce 11, 12, 13, 14 de préhension s'étend sur une plage angulaire de l'ordre de 60° de manière que leur face 29 intérieure possède une surface d'appui suffisante pour engendrer une friction propre à retenir efficacement le col 10. Un résultat analogue pourrait être obtenu en ayant recours à un nombre supérieur (par exemple cinq) de pièces de préhension de moindre longueur ou à un nombre inférieur (par exemple trois) de pièces de préhension de longueur supérieure mais qui risqueraient alors d'appuyer moins efficacement sur le col sur la totalité de leur longueur.

Dans une mise en oeuvre non représentée, les pièces de préhension ont leur face 29 radialement intérieure qui présente une première partie, inférieure, tronconique et une seconde partie, supérieure, cylindrique de révolution, un ressaut étant défini entre ces première et deuxième parties. Cette mise en oeuvre est avantageuse lorsque le col 10 du corps creux est pourvu d'une saillie annulaire externe, car la préhension du corps creux est alors assurée par le déplacement latéral, sensiblement radial, des pièces 11, 12, 13, 14 de préhension, le col 10 glissant sur la première partie tronconique de la face des pièces de préhension, un encliquetage étant obtenu lorsqu'une saillie externe du col 10 vient en appui contre ledit ressaut formant saillie.

Un traitement de surface, par exemple sablage, peut avantageusement être réalisé sur la face 29 radialement intérieure des pièces 11, 12, 13, 14 de préhension, afin d'augmenter le coefficient de frottement.

Il est à noter que les pièces 11, 12, 13, 14 de préhension sont des pièces distinctes et que leurs jeux fonctionnels respectifs sont relativement indépendants. Cette disposition permet au dispositif de préhension de tolérer des variations dimensionnelles sensibles de cols de corps creux.

Pour empêcher la chaleur piégée à l'intérieur des corps creux d'entrer en contact avec le col 10, il est possible de reconduire les moyens de protection mis en oeuvre dans le dispositif de préhension du document FR 2 789 932. A cet effet, le dispositif de préhension comporte un noyau 22 fixé coaxialement à l'intérieur du corps 18 annulaire, par exemple au moyen de la vis 25, de telle manière qu'au moins sa face 23 transversale inférieure formant une surface réfléchissante soit située approximativement à la base du col ou au niveau de la jonction entre le col et le corps à -proprement parler du corps creux comme visible à la figure 2. Le noyau 22 peut comporter un radiateur, par exemple formé d'ailettes 30 superposées, permettant d'évacuer les calories.

Dans une réalisation non réprésentée, le noyau 22 ne pénètre pas dans le col 10, évitant les risques de rayure de la face interne de ce col et permettant l'utilisation du dispositif dans des machines aseptiques.

On peut également équiper l'élément 1 de transport d'un dispositif de d'éjection tel que celui prévu dans le document FR 2 789 932, lequel dispositif d'éjection comporte une couronne 6 munie de plusieurs (typiquement trois) doigts 7, 8, 9 répartis à 120 degrés sur un cercle dont le diamètre est sensiblement identique, mais légèrement inférieur, au diamètre du buvant 31 du col 10. Lors d'une course relative d'éjection de préforme, les doigts 7, 8, 9 d'éjection viennent en appui contre le buvant 31 du col 10 afin de le repousser axialement vers le bas par rapport au dispositif 5 de préhension.

Le dispositif de préhension tel qu'il vient d'être décrit présente de nombreux avantages.

La préhension des corps creux par l'extérieur de leur col 10 permet de les convoyer sur des machines aseptiques, sans toucher à l'intérieur du col 10.

A l'inverse du montage décrit dans le document FR 2 789 932, lors du convoyage des corps creux dans un four, il n'y a plus de risques de détérioration du système de préhension par la chaleur ou les rayonnements.

Le dispositif de préhension, à l'inverse de nombre de ceux proposés dans l'art antérieur, ne comporte aucun système mécanique à risque, tel que par exemple ressort, pouvant changer de caractéristiques techniques sous l'action de la chaleur ou en présence d'infrarouges.

Le dispositif de préhension présente un encombrement sensiblement identique à ceux montés sur les machines actuellement en service et il est donc possible d'énvisager le remplacement de ces derniers par simple échange.

## Revendications

1. Dispositif (5) de préhension, par l'extérieur, d'un col (10) d'un corps creux, lequel dispositif de préhension comporte un corps (18) annulaire supportant au moins deux pièces (11, 12, 13, 14) de préhension possédant des faces (29) d'appui respectives, lesdites pièces de préhension étant déplaçables sensiblement radialement et contraintes par des moyens (15) élastiques de manière telle que lesdites pièces (11, 12, 13, 14) de préhension soient aptes à occuper une première position radiale dans laquelle elles sont en appui contre une butée du corps (18) annulaire avec leur face (29) d'appui saillant à l'intérieur du corps (18) annulaire et une seconde position radiale dans laquelle elles sont repoussées avec leur face (29) d'appui portant contre la paroi extérieure du col (10) d'un corps creux engagé dans ledit corps (18) annulaire,
**caractérisé en ce que** les faces (29) d'appui desdites pièces (11, 12, 13, 14) de préhension sont arquées en forme générale d'arc de cylindre.

2. Dispositif de préhension selon la revendication 1, **caractérisé en ce que** le corps (18) annulaire comporte au moins deux lumières (26) et **en ce que** les pièces (11, 12, 13, 14) de préhension sont engagées respectivement à travers ces lumières (26).

3. Dispositif de préhension selon la revendication 1 ou 2, **caractérisé en ce que** les pièces (11, 12, 13, 14) de préhension sont des segments de bague et **en ce que** les lumières (26) sont des lumières allongées.

4. Dispositif de préhension selon l'une quelconque des revendications 1 à 3, **caractérisé en ce qu'**au moins une pièce de préhension comporte une partie extrême inférieure tronconique et/ou une saillie sur sa face d'appui.

5. Dispositif de préhension selon l'une quelconque des revendications 1 à 4, **caractérisé en ce que** les pièces (11, 12, 13, 14) de préhension sont distribuées de façon sensiblement équidistante sur le corps (18) annulaire.

6. Dispositif de préhension selon l'une quelconque des revendications 1 à 5, **caractérisé en ce que** les pièces (11, 12, 13, 14) de préhension sont au nombre de quatre diamétralement opposées deux à deux.

7. Dispositif de préhension selon l'une quelconque des revendications 1 à 6, **caractérisé en ce que** les moyens (15) élastiques comprennent au moins une bague en un matériau élastique entourant le corps (18) annulaire et les pièces (11, 12, 13, 14) de préhension.

8. Dispositif de préhension selon la revendication 7, **caractérisé en ce que** les moyens (15) élastiques comprennent plusieurs joints toriques élastiques juxtaposés.

9. Dispositif de préhension selon la revendication 7 ou 8, **caractérisé en ce qu'**il comporte une jupe (16) annulaire, solidaire du corps (18) annulaire et supportée par celui-ci, qui s'étend radialement extérieurement aux moyens (15) élastiques.

10. Dispositif de préhension selon l'une quelconque des revendications 1 à 9, **caractérisé en ce qu'**il comprend des moyens d'éjection comportant au moins un doigt (7, 8, 9) sensiblement parallèle à l'axe du corps (18) annulaire et déplaçable parallèlement à cet axe.

11. Dispositif de préhension selon l'une quelconque des revendications 1 à 10, **caractérisé en ce qu'**il comporte un noyau (22) intérieur au corps (18) annulaire et coaxial à celui-ci, ayant une face (23) transversale inférieure qui est réfléchissante pour les rayonnements électromagnétiques.

12. Dispositif de transport de corps creux les uns à la suite des autres, notamment à travers un four tunnel, ce dispositif de transport comprenant une multiplicité d'éléments (1) de transport qui sont accouplés les uns à la suite des autres en une chaîne sans fin et qui comportent des dispositifs (5) respectifs de préhension de corps creux individuels par le col de ceux-ci, **caractérisé en ce que** les dispositifs (5) de préhension sont agencés selon l'une quelconque des revendications 1 à 11.

## Claims

1. A gripper device (5) for gripping the neck (10) of a hollow body from the outside, which gripper device comprises an annular body (18) supporting at least two gripper parts (11, 12, 13, 14) having respective bearing face (29), said gripper parts being movable substantially radially and biased by elastic means (15) in such a way that said gripper parts (11, 12, 13, 14) are caused to occupy a first radial position in which they bear against a buffer of the annular body (18) with their bearing face (29) projecting into the annular body (18), and a second radial position in which they are pushed back with their bearing face (29) bearing against the exterior wall of the neck (10) of a hollow body engaged in said annular body (18),
**characterized in that** the bearing faces (29) of said gripper parts (11, 12, 13, 14) are bowed in the overall shape of an arc of a cylinder.

2. The gripper device as claimed in claim 1, **characterized in that** the annular body (18) comprises at least two slots (26) and **in that** the gripper parts (11, 12, 13, 14) are engaged through these slots (26) respectively.

3. The gripper device as claimed in claim 1 or 2, **characterized in that** the gripper parts (11, 12, 13, 14) are ring segments and **in that** the slots (26) are elongate slots.

4. The gripper device as claimed in any one of claims 1 to 3, **characterized in that** at least one gripper part comprises a frustoconical lower end portion and/or a projection on its bearing face.

5. The gripper device as claimed in any one of claims 1 to 4, **characterized in that** the gripper parts (11, 12, 13, 14) are distributed substantially equidistant from one another on the annular body (18).

6. The gripper device as claimed in any one of claims 1 to 5, **characterized in that** the gripper parts (11, 12, 13, 14) are four in number, in diametrically-opposed pairs.

7. The gripper device as claimed in any one of claims 1 to 6, **characterized in that** the elastic means (15) comprise at least one ring made of an elastic material surrounding the annular body (18) and the gripper parts (11, 12, 13, 14).

8. The gripper device as claimed in claim 7, **characterized in that** the elastic means (15) comprise several juxtaposed elastic O-rings.

9. The gripper device as claimed in claim 7 or 8, **characterized in that** it comprises an annular skirt (16) secured to the annular body (18) and supported thereby, which extends radially externally to the elastic means (15).

10. The gripper device as claimed in any one of claims 1 to 9, **characterized in that** it comprises ejection means including at least one finger (7, 8, 9) substantially parallel to the axis of the annular body (18) and movable parallel to said axis.

11. The gripper device as claimed in any one of claims 1 to 10, **characterized in that** it comprises a core (22) internal to the annular body (18) and coaxial therewith, with a lower transverse face (23) which is reflective to electromagnetic radiation.

12. A device for conveying hollow bodies one after another, particularly through a tunnel oven, this conveying device comprising a multiplicity of conveying elements (1) coupled one after the other into an endless chain and which comprise respective gripper devices (5) for gripping individual hollow bodies by necks thereof, **characterized in that** the gripper devices (5) are arranged as claimed in any one of claims 1 to 11.

## Patentansprüche

1. Vorrichtung (5) zum Ergreifen des Halses (10) eines Hohlkörpers von außen, wobei die Greifvorrichtung einen ringförmigen Körper (18) umfasst, der zumindest zwei Greifteile (11, 12, 13, 14) trägt, die jeweilige Auflageflächen (29) besitzen, wobei die Greifteile im Wesentlichen radial verlagerbar sind und durch elastische Mittel (15) eingespannt sind, sodass die Greifteile (11, 12, 13, 14) geeignet sind, eine erste radiale Position einzunehmen, in welcher sie an einem Anschlag des ringförmigen Körpers (18) anliegen, wobei ihre Auflagefläche (29) in das innere des ringförmigen Körpers (18) vordringt, und eine zweite radiale Position einzunehmen, in welcher sie zurückgeschoben sind, wobei ihre Auflagefläche (29) auf der Außenwand des mit dem ringförmigen Körper (18) in Eingriff stehenden Halses (10) des Hohlkörpers aufliegt,
**dadurch gekennzeichnet, dass** die Auflageflächen (29) der Greifteile (11, 12, 13, 14) in der allgemeinen Form eines Zylinderbogens gebogen sind.

2. Greifvorrichtung nach Anspruch 1, **dadurch gekennzeichnet, dass** der ringförmige Körper (18) mindestens zwei Öffnungen (26) umfasst und dass die Greifteile (11, 12, 13, 14) jeweils durch die Öffnungen (26) in Eingriff gebracht werden.

3. Greifvorrichtung nach Anspruch 1 oder 2, **dadurch gekennzeichnet, dass** die Greifteile (11, 12, 13, 14) Ringsegmente sind und dass die Öffnungen (26) längliche Öffnungen sind.

4. Greifvorrichtung nach einem der Ansprüche 1 bis 3, **dadurch gekennzeichnet, dass** mindestens ein Greifteil einen kegelstumpfförmigen unteren Außenabschnitt und/oder einen Vorsprung auf der Auflagefläche umfasst.

5. Greifvorrichtung nach einem der Ansprüche 1 bis 4, **dadurch gekennzeichnet, dass** die Greifteile (11, 12, 13, 14) auf im Wesentlichen abstandsgleiche Weise auf dem ringförmigen Körper (18) verteilt sind.

6. Greifvorrichtung nach einem der Ansprüche 1 bis 5, **dadurch gekennzeichnet, dass** die Greifteile (11, 12, 13, 14) vier an der Zahl sind und paarweise diametral gegenüber liegen.

7. Greifvorrichtung nach einem der Ansprüche 1 bis 6, **dadurch gekennzeichnet, dass** die elastischen Mittel (15) mindestens einen Ring aus einem elastischen Material umfassen, das den ringförmigen Körper (18) und die Greifteile (11, 12, 13, 14) umgibt.

8. Greifvorrichtung nach Anspruch 7, **dadurch gekennzeichnet, dass** die elastischen Mittel (15) mehrere nebeneinander liegende elastische O-Ringe umfassen.

9. Greifvorrichtung nach Anspruch 7 oder 8, **dadurch gekennzeichnet, dass** sie eine mit dem ringförmigen Körper (18) fest verbundene und von ihm getragene ringförmige Schürze (16) umfasst, die sich von den elastischen Mitteln (15) radial nach außen erstreckt.

10. Greifvorrichtung nach einem der Ansprüche 1 bis 9, **dadurch gekennzeichnet, dass** sie Auswurfmittel mit mindestens einem Finger (7, 8, 9) aufweist, der im Wesentlichen parallel zur Achse des ringförmigen Körpers (18) ist und parallel zu dieser Achse verlagerbar ist.

11. Greifvorrichtung nach einem der Ansprüche 1 bis 10, **dadurch gekennzeichnet, dass** sie einen im Inneren des ringförmigen Körpers (18) und koaxial zu diesem liegenden Kern (22) umfasst, der eine untere Querfläche (23) aufweist, die für elektromagnetische Strahlen reflektierend ist.

12. Vorrichtung zum Transport von aufeinanderfolgenden Hohlkörpern, insbesondere durch einen Tunnelofen, wobei die Transportvorrichtung eine Vielzahl von Transportelementen (1) umfasst, die hintereinander an einer Endloskette angehängt sind und die jeweilige Vorrichtungen (5) zum Ergreifen einzelner Hohlkörper am Hals derselben umfassen, **dadurch gekennzeichnet, dass** die Greifvorrichtungen (5) gemäß einem der Ansprüche 1 bis 11 ausgestaltet sind.
